# EUROPEAN PATENT SPECIFICATION

(11) **EP 4 279 302 B1**
(45) Date of publication and mention of the grant of the patent: **22.04.2026**
(21) Application number: 21918243.3
(22) Date of filing: 13.01.2021
(51) Int. Cl.: B60H 1/34

(54) **VEHICLE COMPRISING AN AIR OUTLET ASSEMBLY**
FAHRZEUG MIT EINER LUFTAUSLASSANORDNUNG
VÉHICULE COMPRENANT UN ENSEMBLE DE SORTIE D'AIR

(43) Date of publication of application: 22.11.2023
(73) Proprietor: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: ZHOU, Jin, Hangzhou, Zhejiang 310051 (CN); SHUI, Weikang, Hangzhou, Zhejiang 310051 (CN)
(74) Representative: Murgitroyd & Company
(86) International application number: PCT/CN2021/071436
(87) International publication number: WO 2022/151027

(56) References cited:
- CN-A- 105 774 475
- CN-A- 106 132 740
- CN-A- 109 501 556
- CN-U- 210 436 971
- DE-A1- 102018 211 375
- DE-U1- 202008 008 872
- FR-A1- 2 886 383
- JP-A- H08 197 940

## Description

### Technical Field

The present invention relates to a vehicle comprising an air conditioner air guide pipe and at least one air outlet assembly.

### Background Art

At present, an air outlet of a traditional car has mainly guided air by virtue of an air outlet blade, and an air outlet assembly has been fixed to an instrument desk or an auxiliary instrument desk so as to be incapable of rotating. For the need of human-machine comfort, an air flow at an air outlet has to be upwards blown over the head and downwards blown to the waist. Due to such a demand, the arrangement position of the outlet is limited, and facilitate the development of modeling creativity is also limited by the exposed blade.

The published German utility model application DE202008008872U1 relates to an air nozzle. The published French patent application FR2886383A1 relates to a motor vehicle air vent with variable flow direction and rate and having an inner shutter with groove for lengthwise-sliding arm. The published German patent application DE102018211375A1 relates to an air outlet for directing air flow in different directions into a vehicle interior.

### Summary of the Invention

In view of the above-mentioned problems, the present invention is proposed to provide a vehicle comprising at least one air outlet assembly overcoming the above-mentioned problems or at least partially solving the above-mentioned problems. In accordance with the present invention there is provided a vehicle comprising at least one air outlet assembly, as set out in independent claim 1. Preferred embodiments of the present invention are laid down in the appended dependent claims.

One objective of a first aspect of the present invention is to provide a vehicle comprising at least one air outlet assembly capable of reducing the limitations on the arrangement position of an outlet, and facilitating the development of modeling creativity.

The other objective of the present invention is to provide a vehicle comprising at least one air outlet assembly which widens a coverage range of an air flow at an air outlet.

Particularly, one aspect of an embodiment of the present invention provides a vehicle comprising at least one air outlet assembly, as defined in independent claim 1.

Optionally, the end, close to the driver compartment, of the air channel is configured to gradually expand in a direction pointing to the driver compartment, and an appearance of the end, close to the driver compartment, of the air outlet main body component is configured to gradually shrink in the direction pointing to the driver compartment, so that an expansion opening is formed in the end, close to the driver compartment, of the second channel.

Optionally, the at least one damper blade is configured to block the air channel when the air outlet main body component is located on an initial position and to be in gradual communication with the air channel when the air outlet main body component moves from the initial position to the driver compartment.

Optionally, the at least one damper blade is further configured to be in communication with the air channel to the greatest extent when the air outlet main body component moves to be partially exposed out of the instrument panel decorative plate.

Optionally, the air outlet main body component includes:
an air outlet housing in which the first channel is formed, the second channel being formed by an outer surface of the air outlet housing and the inner wall face of the air channel.

Optionally, a plurality of air outlet nozzles configured to partition an air flow inside the first channel into a plurality of paths of air flows are formed on the end, close to the driver compartment, of the air outlet housing.

Optionally, each of the air outlet nozzles is configured to gradually shrink in the direction pointing to the driver compartment.

Optionally, the air outlet main body component further includes:
two first rotating shafts aligned to the preset axis and respectively arranged on two sides of the outer surface of the air outlet housing; and
two first gears, each of the first gears rotatably sleeving each of the first rotating shafts;
the instrument panel decorative plate being provided with strip-shaped gear holes corresponding to each of the first gears, length directions of the strip-shaped gear holes being parallel to the axial direction of the air channel, and at least one inner wall in the length directions of the strip-shaped gear holes being provided with a plurality of first gear teeth meshed with the first gears.

Optionally, the air outlet main body component further includes:
an integrated lower-layer blade including a plurality of second rotating shafts and a plurality of blinkers in one-to-one correspondence to each other, the plurality of blinkers being linked, each of the second rotating shafts being configured to rotatably connect the corresponding blinker to the air outlet housing, one of the blinkers being fixedly provided with a toggling frame, and the toggling frame being provided with a through hole vertically passing through the blinker; and
an impeller rotatably connected to the air outlet housing, the axial direction of the impeller being parallel to axial directions of the second rotating shafts, the impeller being provided with a gap with an opening facing the integrated lower-layer blade, at least parts of the toggling frame extending into the gap, and therefore, when the impeller rotates, the toggling frame drives the integrated lower-layer blade to overturn to close or be in communication with the first channel and adjust a direction of an air flow flowing through the first channel under the condition that the first channel is in communication.

Optionally, the first rotating shafts are arranged in the transverse direction of the vehicle, and the second rotating shafts are arranged in the vertical direction of the vehicle.

Optionally, the linkage mechanism includes:
at least one second gear;
third rotating shafts corresponding to each of the second gears, each of the third rotating shafts being fixed to a rotation center of each of the second gears and being fixedly connected to each of the damper blades, wherein axes of the third rotating shafts are parallel to axes of the first rotating shafts; and
a gear sheet extending in the axial direction of the air channel, one end of the gear sheet sleeving one of the first rotating shafts, and a plurality of second gear teeth meshed with the second gears being arranged in the length direction of the gear sheet, so that the air outlet main body component drives each of the damper blades to rotate during movement.

Optionally, the gear sheet is sheet-like, and the thickness direction thereof is parallel to the axes of the third rotating shafts; and
the number of the second gears is two, and the two second gears are respectively arranged on two sides in the width direction of the gear sheet and are respectively meshed with the second gear teeth opposite thereto.

Optionally, the air outlet assembly further includes:
a first motor configured to control the air outlet main body component to move; and
a second motor configured to control the air outlet main body component to rotate.

According to the present invention, one air outlet main body component is arranged alone in the air channel in the instrument panel decorative plate, and the air outlet main body component is capable of moving and rotating relative to the instrument panel decorative plate. The position and orientation of the first channel inside the air outlet main body component are changed by controlling the movement and rotation of the air outlet main body component, and thus, flowing directions of air flows in the first channel and the second channel and a coverage range of an air flow flowing out of the air outlet assembly are changed. Compared with an existing structure that an air outlet blade is directly connected to the instrument panel decorative plate and an air direction is adjusted by changing an angle of the air outlet blade, the present invention provides a vehicle comprising at least one air outlet assembly having an air outlet main body component being arranged alone in the instrument panel decorative plate, and the air direction and the coverage range of the air flow are adjusted by controlling the movement and rotation of the air outlet main body component, so that the coverage range of the air flow is widened, the comfort level of a user is improved, the arrangement position of an air outlet can be selected within a wider range, there are more choices for the modeling creativity of the air outlet, and the development of the modeling creativity is facilitated.

Further, an appearance of a front end of the air outlet main body component (which is specifically the air outlet housing of the air outlet main body component) gradually shrinks in a direction pointing to the driver compartment, and the end, close to the driver compartment, of the air channel at the inside of the instrument panel decorative plate gradually expands in the direction pointing to the driver compartment, so that an expansion opening is formed in the end, close to the driver compartment, of the second channel formed between the air outlet housing and the instrument panel decorative plate, and then, the coverage range of the air flow is widened. Moreover, in the present invention, the air flow is jointly guided by the modeling of the instrument panel decorative plate and the appearance of the air outlet main body component, the traditional blade modeling is abandoned, and the selectivity of the modeling creativity of the air outlet is further enriched.

Further, a plurality of air outlet nozzles configured to partition an air flow inside the first channel into a plurality of paths of air flows are formed on the end, close to the driver compartment, of the air outlet housing. The plurality of air outlet nozzles formed on the air outlet housing can effectively disperse the air flow into a plurality of air paths to increase the flow velocity of the air flow here, so that warm air or cold air rapidly and centrally blows to the driver compartment, and the user experience is improved.

Further, the air outlet nozzles are all configured to gradually shrink in the direction pointing to the driver compartment, in this way, the cross section of an air flow channel can be further reduced, the air flow can be better centralized, and the flow velocity can be increased.

The above-mentioned description is merely a summary of the technical solutions of the present invention. In order to more clearly know about the technical means of the present invention, they may be implemented according to the content of the description. Moreover, in order to make the above-mentioned and other objectives, features, and advantages of the present invention more obvious and comprehensible, the specific implementations of the present invention will be listed below.

According to the following detailed description of the specific embodiments of the present invention in combination with accompanying drawings, the skilled in the art will better know about the above-mentioned and other objectives, advantages and characteristics of the present invention.

### Brief Description of the Drawings

Hereinafter, some specific embodiments of the present invention will be described in detail with reference to accompanying drawings in an exemplary way instead of a restrictive way. The same reference numerals in the accompanying drawings indicate the same or similar components or parts. It should be understood by the skilled in the art that these accompanying drawings are not necessarily drawn according to a proportion. In the accompanying drawings:
FIG. 1 is a cross-sectional view of an air outlet assembly and an air conditioner air guide pipe of a vehicle according to an embodiment of the present invention;
FIG. 2 is a cross-sectional view shown when an air outlet main body component of the air outlet assembly rotates to a first angle, in a vehicle according to an embodiment of the present invention;
FIG. 3 is a cross-sectional view shown when the air outlet main body component of the air outlet assembly rotates to a second angle, in a vehicle according to an embodiment of the present invention;
FIG. 4 is a schematic structural view of the air outlet assembly and the air conditioner air guide pipe of a vehicle according to an embodiment of the present invention;
FIG. 5 is a schematic structural view of the air outlet assembly with the air conditioner air guide pipe being hidden, in a vehicle according to an embodiment of the present invention;
FIG. 6 is a schematic structural view of the air outlet assembly with damper blades and a linkage mechanism being hidden, in a vehicle according to an embodiment of the present invention;
FIG. 7 is a partial enlarged view of part A in FIG. 6; and
FIG. 8 is a schematic assembling view of an integrated lower-layer blade and an impeller of the air outlet assembly of a vehicle according to an embodiment of the present invention.

### Detailed Description of the Invention

Exemplary embodiments in the present invention will be described in more detail below with reference to the accompanying drawings. Although the exemplary embodiments in the present invention are shown in the accompanying drawings, it should be understood that the present invention can be implemented in various forms, but should not be limited by the embodiments described herein. On the contrary, these embodiments are provided for understanding the present invention more thoroughly and integrally transmitting the scope of the present invention to the skilled in the art.

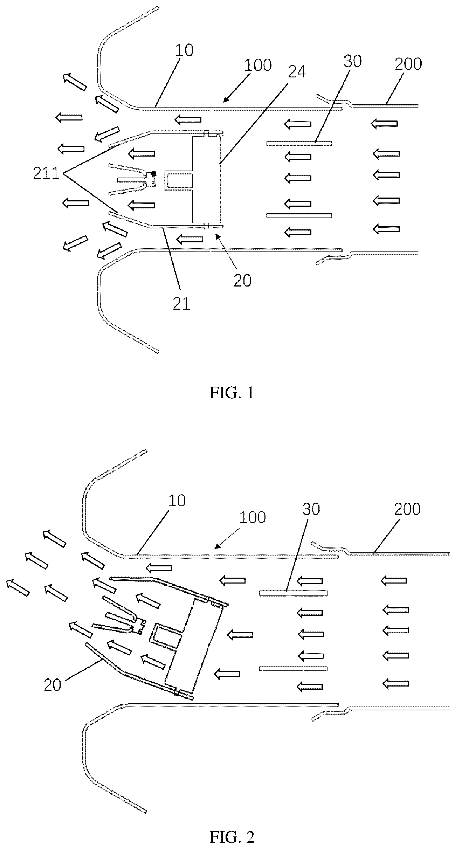

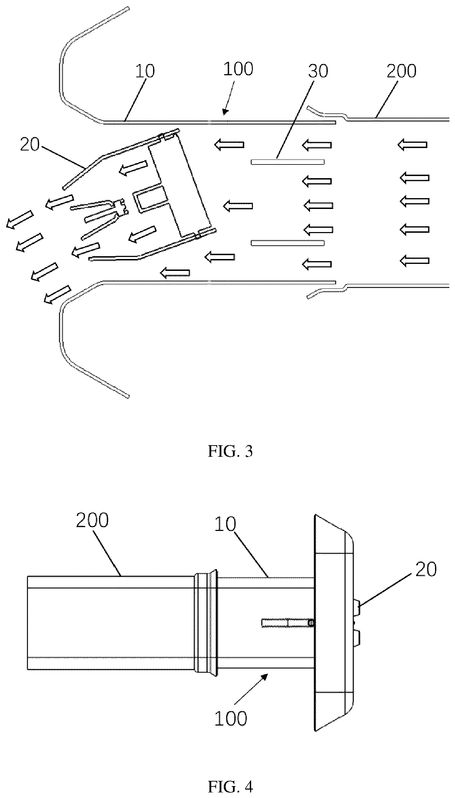

FIG. 1 is a cross-sectional view of an air outlet assembly 100 and an air conditioner air guide pipe 200 of a vehicle according to an embodiment of the present invention. FIG. 2 is a cross-sectional view shown when an air outlet main body component 20 of the air outlet assembly 100 rotates to a first angle, in a vehicle according to an embodiment of the present invention. FIG. 3 is a cross-sectional view shown when the air outlet main body component 20 of the air outlet assembly 100 rotates to a second angle, in a vehicle according to an embodiment of the present invention. Arrows in FIG. 1 to FIG. 3 represent a trend of an air flow. As shown in FIG. 1, in an embodiment, the air outlet assembly 100 includes an instrument panel decorative plate 10 and the air outlet main body component 20. An air channel which is in communication with the air conditioner air guide pipe 200 of a vehicle is arranged at the inside of the instrument panel decorative plate 10, and an opening at the end, away from the air conditioner air guide pipe 200, of the air channel faces a driver compartment. The air outlet main body component 20 is arranged in the air channel. A first channel which is capable of being opened and closed is arranged in the air outlet main body component 20, a second channel is formed by an outer surface of the air outlet main body component 20 and an inner wall face of the air channel, and the air outlet main body component 20 is configured to be controlled to move in the axial direction of the air channel and rotate around a preset axis (as shown in FIG. 2 and FIG. 3). The preset axis is perpendicular to a vertical plane in the axial direction of the air channel. Herein, the shape of the air outlet main body component 20 can be adaptively designed according to the shape of the air channel, for example, when the air channel is a square channel, the air outlet main body component 20 can also be set to be of an approximately square shape, and when the air channel is shaped like a circular pipe, the air outlet main body component 20 can also be set to have a circular cross section.

As shown in FIG. 1, the air outlet main body component 20 in this position state makes an air flow basically blown out in the axial direction of the air channel. The air outlet main body component 20 in FIG. 2 upwarps so that the air flow is obliquely and upwards blown out from the second channel and the first channel which are located above the air outlet main body component 20. The air outlet main body component 20 in FIG. 3 is downwards inclined so that the air flow is obliquely and downwards blown out from the second channel and the first channel which are located below the air outlet main body component 20. In addition, the air outlet main body component 20 moves forwards and backwards so that the air outlet assembly 100 can cover an air flow direction within a wider range.

In the present embodiment, one air outlet main body component 20 is arranged alone in the air channel in the instrument panel decorative plate 10, and the air outlet main body component 20 is capable of moving and rotating relative to the instrument panel decorative plate 10. The position and orientation of the first channel inside the air outlet main body component 20 are changed by controlling the movement and rotation of the air outlet main body component 20, and thus, flowing directions of air flows in the first channel and the second channel and a coverage range of an air flow flowing out of the air outlet assembly 100 are changed. Compared with an existing structure that an air outlet blade is directly connected to the instrument panel decorative plate 10 and an air direction is adjusted by changing an angle of the air outlet blade, the present invention provides a vehicle comprising at least one air outlet assembly having an air outlet main body component 20 being arranged alone in the instrument panel decorative plate 10, and the air direction and the coverage range of the air flow are adjusted by controlling the movement and rotation of the air outlet main body component 20, so that the coverage range of the air flow is widened, the comfort level of a user is improved, the arrangement position of an air outlet can be selected within a wider range, there are more choices for the modeling creativity of the air outlet, and the development of the modeling creativity is facilitated.

As shown in FIG. 1, in a further embodiment, the end, close to the driver compartment, of the air channel is configured to gradually expand in a direction pointing to the driver compartment, and an appearance of the end, close to the driver compartment, of the air outlet main body component 20 is configured to gradually shrink in the direction pointing to the driver compartment, so that an expansion opening is formed in the end, close to the driver compartment, of the second channel.

Herein, it is equivalent to arrangement of a flanging for guidance at the end, close to the driver compartment, of the instrument panel decorative plate 10. A space is left between the air outlet main body component 20 and the instrument panel decorative plate 10 to enable the air flow to flow along a surface of the flanging, so that an area covered by the air flow is further expanded. In the present embodiment, the air flow is jointly guided by the modeling of the instrument panel decorative plate 10 and the appearance of the air outlet main body component 20, the traditional blade modeling is abandoned, and the selectivity of the modeling creativity of the air outlet is further enriched.

FIG. 4 is a schematic structural view of the air outlet assembly 100 and the air conditioner air guide pipe 200 of a vehicle according to an embodiment of the present invention. The air outlet assembly 100 further includes at least one damper blade 30 rotatably connected to the inside of the air channel (with reference to FIG. 1) and configured to be in communication with or block the air channel. The air outlet assembly 100 further includes a linkage mechanism 40 configured to connect the at least one damper blade 30 and the air outlet main body component 20, so that the air outlet main body component 20 drives the at least one damper blade 30 to rotate during movement. Optionally, the at least one damper blade 30 is configured to block the air channel when the air outlet main body component 20 is located on an initial position and to be in gradual communication with the air channel when the air outlet main body component 20 moves from the initial position to the driver compartment. It can be imagined that the air channel can be completely closed when the damper blades 30 rotate for 90° clockwise or counterclockwise from a state in FIG. 1. Due to the arrangement of the linkage mechanism 40, the movement of the air outlet main body component 20 may drive the rotation of the damper blades 30, and then, the flow rate of the air flow is distributed, that is, the amount and angle of the air flow flowing out of the damper blades 30 are controlled.

Of course, the damper blades 30 may also be rotatably connected to the air conditioner air guide pipe 200 to control the blockage or communication of the air channel inside the air conditioner air guide pipe 200. In the present embodiment, the damper blades 30 are arranged in the air channel of the instrument panel decorative plate 10 to conveniently form an assembly with the air outlet assembly 100, thereby facilitating assembly.

In a further embodiment, the at least one damper blade 30 is further configured to be in communication with the air channel to the greatest extent when the air outlet main body component 20 moves to be partially exposed out of the instrument panel decorative plate 10 (with reference to FIG. 4), at the moment, states of the damper blades 30 are shown in FIG. 1. Of course, in other embodiments, the position of the air outlet main body component 20 and the states of the damper blades 30 can also be correspondingly set, for example, the damper blades 30 are completely opened when the front end of the air outlet main body component 20 is flushed with the instrument panel decorative plate 10. During applications to a specific vehicle, the position of the air outlet main body component 20 and the states of the damper blades 30 of the air outlet assembly 100 on a different position can also be designed to be the same or different, and thus, the comfort level is improved.

As shown in FIG. 1, in the present embodiment, the air outlet main body component 20 includes an air outlet housing 21 in which the first channel is formed, the second channel is formed by an outer surface of the air outlet housing 21 and the inner wall face of the air channel. It can be seen from FIG. 1 that an appearance of a front end of the air outlet housing 21 gradually shrinks in a direction pointing to the driver compartment, and the end, close to the driver compartment, of the air channel at the inside of the instrument panel decorative plate 10 gradually expands in the direction pointing to the driver compartment, so that an expansion opening is formed in the end, close to the driver compartment, of the second channel formed between the air outlet housing 21 and the instrument panel decorative plate 10, and then, the coverage range of the air flow is widened.

In a further embodiment, as shown in FIG. 1, a plurality of air outlet nozzles 211 configured to partition an air flow inside the first channel into a plurality of paths of air flows are formed on the end, close to the driver compartment, of the air outlet housing 21. The plurality of air outlet nozzles 211 formed on the air outlet housing 21 can effectively disperse the air flow into a plurality of air paths to increase the flow velocity of the air flow here, so that warm air or cold air rapidly and centrally blows to the driver compartment, and the user experience is improved.

Optionally, the air outlet nozzles 211 are all configured to gradually shrink in the direction pointing to the driver compartment, in this way, the cross section of an air flow channel can be further reduced, the air flow can be better centralized, and the flow velocity can be increased.

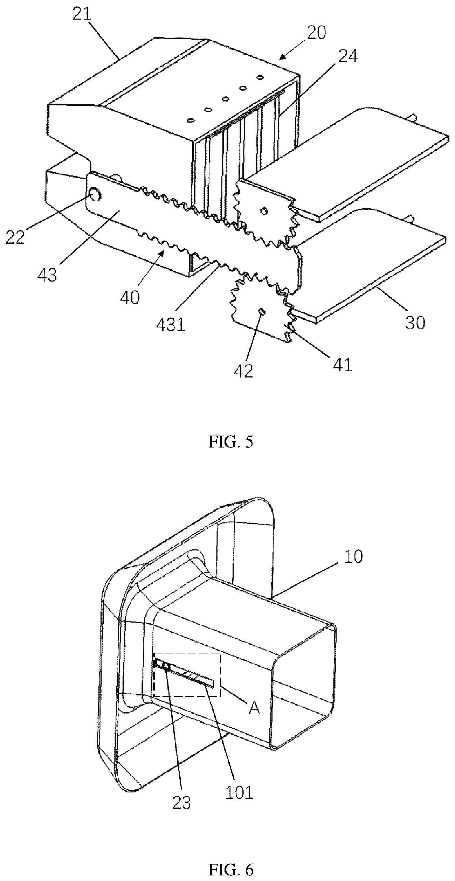

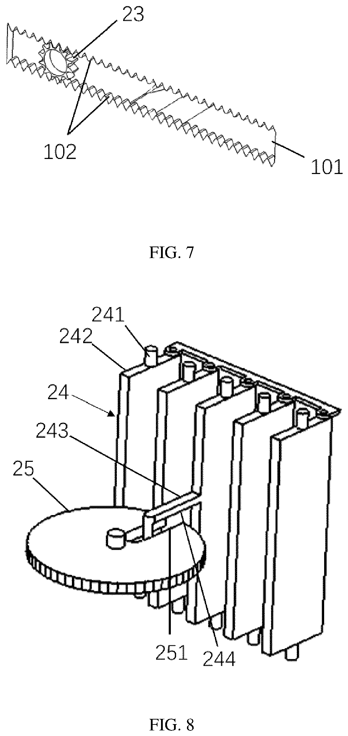

FIG. 5 is a schematic structural view of the air outlet assembly 100 with the air conditioner air guide pipe 200 being hidden, in a vehicle according to an embodiment of the present invention. FIG. 6 is a schematic structural view of the air outlet assembly 100 with damper blades 30 and a linkage mechanism 40 being hidden, in a vehicle according to an embodiment of the present invention. FIG. 7 is a partial enlarged view of part A in FIG. 6. In an embodiment, as shown in FIG. 5, the air outlet main body component 20 further includes two first rotating shafts 22 aligned to the preset axis and two first gears 23. The two first rotating shafts 22 are respectively arranged on two sides of the outer surface of the air outlet housing 21. Each of the first gears 23 rotatably sleeves each of the first rotating shafts 22. As shown in FIG. 6, the instrument panel decorative plate 10 is provided with strip-shaped gear holes 101 corresponding to each of the first gears 23, length directions of the strip-shaped gear holes 101 are parallel to the axial direction of the air channel, and at least one inner wall in the length directions of the strip-shaped gear holes 101 is provided with a plurality of first gear teeth 102 meshed with the first gears 23 (with reference to FIG. 7). That is, one inner wall in the length directions of the strip-shaped gear holes 101 is provided with the first gear teeth 102 or two inner walls are both provided with the first gear teeth 102. Generally, the first gear teeth 102 are preferably arranged on an inner wall at the downside in the vertical direction of the vehicle. When the two inner walls of the strip-shaped gear holes 101 are both provided with the first gear teeth 102, up-and-down exchange is enabled during assembly, and therefore, the assembling difficulty can be lowered, and rework can be reduced.

When a force in the axial direction of the air channel is applied to the first gears 23 or the first rotating shafts 22, the first gears 23 and the first rotating shafts 22 move together in the length direction of the strip-shaped gear holes 101, and thus, the movement of the air outlet main body component 20 in the axial direction of the air channel is controlled. By applying a torque to the first rotating shafts 22, the first rotating shafts 22 rotate along axes thereof (at the moment, the first gears 23 does not rotate with the first rotating shafts 22), thereby driving the air outlet main body component 20 to rotate.

Optionally, the above-mentioned force driving the first gears 23 or the first rotating shaft 22 to move may be implemented by arranging a mechanical mechanism such as a long rod with one end being connected to the first gears 23 or the first rotating shafts 22, and the other ends being controlled by a driver. For example, corresponding keys are arranged in the driver compartment to control the other end of the long rod, thereby pushing the first gears 23 or the first rotating shafts 22. Of course, a first motor configured to controlling the air outlet main body component 20 to move may also be additionally arranged, the first motor may output a certain displacement and be connected to the first gears 23 or the first rotating shafts 22, and the movement of the first gears 23 or the first rotating shafts 22 is controlled by controlling the starting or stopping of the first motor. Similarly, a moment enabling the first rotating shafts 22 to rotate may also be implemented by arranging a mechanical mechanism or a second motor, and the second motor may output a torque and configured to control the air outlet main body component 20 to rotate.

FIG. 8 is a schematic assembling view of an integrated lower-layer blade 24 and an impeller 25 of the air outlet assembly 100 of a vehicle according to an embodiment of the present invention. As shown in FIG. 8, in the present embodiment, the air outlet main body component 20 further includes an integrated lower-layer blade 24 and an impeller 25. The integrated lower-layer blade 24 includes a plurality of second rotating shafts 241 and a plurality of blinkers 242 in one-to-one correspondence to each other, the plurality of blinkers 242 are linked, each of the second rotating shafts 241 is configured to rotatably connect the corresponding blinker 242 to the air outlet housing 21, one of the blinkers 242 is fixedly provided with a toggling frame 243, and the toggling frame 243 is provided with a through hole 244 vertically passing through the blinker 242. The impeller 25 is rotatably connected to the air outlet housing 21, the axial direction of the impeller 25 is parallel to axial directions of the second rotating shafts 241, the impeller 25 is provided with a gap 251 with an opening facing the integrated lower-layer blade 24, at least parts of the toggling frame 243 extend into the gap 251, and therefore, when the impeller 25 rotates, the toggling frame 243 drives the integrated lower-layer blade 24 to overturn to close or be in communication with the first channel.

Moreover, in the present embodiment, the integrated lower-layer blade 24 and the impeller 25 are arranged in the air outlet housing 21, the impeller 25 may drive the plurality of blinkers 242 of the integrated lower-layer blade 24 to rotate at the same time, and then, a flowing direction of an air flow in the air outlet housing 21 can be changed by different rotation angles of the blinkers 242 under the condition that the first channel is in communication, so that an adjustment direction is increased for the air direction of the air flow flowing through the first channel to better serve for users and meet diversified demands of the users.

In an embodiment, the first rotating shafts 22 are arranged in the transverse direction of the vehicle, and the second rotating shafts 241 are arranged in the vertical direction of the vehicle. At the moment, the axial direction of the air channel is regarded as the longitudinal direction of the vehicle, i.e. a direction directly facing the front of the driver, at the moment, the rotation of the air outlet main body component 20 meets a demand of adjusting an air direction in the vertical direction of the vehicle, and the rotation of the integrated lower-layer blade 24 meets a demand of adjusting an air direction in the horizontal direction of the vehicle. In addition, the foregoing air outlet main body component 20 may move in the axial direction of the air channel, that is, the air outlet main body component 20 may move in the longitudinal direction of the vehicle, so that the air outlet range of the overall air outlet assembly 100 can meet air outlet demands in all directions of the driver compartment, and the user experience is improved.

Further, the rotation of the air outlet main body component 20 can meet the air outlet demand of the vehicle in the vertical direction, so that an arrangeable area of the air outlet assembly 100 in a vertical space of the vehicle is larger, and the development of modeling creativity is facilitated.

As shown in FIG. 5, the linkage mechanism 40 includes at least one second gear 41, third rotating shafts 42 corresponding to each of the second gears 41, and a gear sheet 43. Each of the third rotating shafts 42 is fixed to a rotation center of each of the second gears 41 and is fixedly connected to each of the damper blades 30, wherein axes of the third rotating shafts 42 are parallel to axes of the first rotating shafts 22. The gear sheet 43 extends in the axial direction of the air channel, one end of the gear sheet 43 sleeves one of the first rotating shafts 22, and a plurality of second gear teeth 431 meshed with the second gears 41 are arranged in the length direction of the gear sheet 43, so that the air outlet main body component 20 drives each of the damper blades 30 to rotate during movement. In a further embodiment, as shown in FIG. 5, the gear sheet 43 is sheet-like, and the thickness direction thereof is parallel to the axes of the third rotating shafts 42. The number of the second gears 41 is two, and the two second gears 41 are respectively arranged on two sides in the width direction of the gear sheet 43 and are respectively meshed with the second gear teeth 431 opposite thereto.

The present embodiment shows a specific form of a linkage mechanism 40. When the air outlet housing 21 starts to move under the action of an external force, the first rotating shafts 22 drive the gear sheet 43 to move, thereby driving the second gears 41 meshed with the gear sheet 43 and the third rotating shafts 42 to rotate; and the third rotating shafts 42 rotates to drive the damper blades 30 to overturn, thereby controlling the opening or closing of the first air channel. As shown above, a corresponding relationship between a rotation angle of each of the damper blades 30 and a movement amount of the air outlet main body component 20 may be designed, thereby better meeting an air outlet demand.

The air outlet assembly 100 of a vehicle according to the present invention, is provided with one air outlet main body component 20 alone in the air channel in the instrument panel decorative plate 10, and the air outlet main body component 20 is capable of moving and rotating relative to the instrument panel decorative plate 10. The position and orientation of the first channel inside the air outlet main body component 20 are changed by controlling the movement and rotation of the air outlet main body component 20, and thus, flowing directions of air flows in the first channel and the second channel and a coverage range of an air flow flowing out of the air outlet assembly 100 are changed. Compared with an existing structure that an air outlet blade is directly connected to the instrument panel decorative plate 10 and an air direction is adjusted by changing an angle of the air outlet blade, the present invention provides a vehicle comprising at least one air outlet assembly having an air outlet main body component 20 being arranged alone in the instrument panel decorative plate 10, and the air direction and the coverage range of the air flow are adjusted by controlling the movement and rotation of the air outlet main body component 20, so that the coverage range of the air flow is widened, the comfort level of a user is improved, the arrangement position of an air outlet can be selected within a wider range, there are more choices for the modeling creativity of the air outlet, and the development of the modeling creativity is facilitated.

So far, those skilled in the art should recognize that the exemplarily embodiments of the present invention have been shown and described in detail herein, however, many other variations or modifications conforming to the principle of the present invention can be directly determined or deduced according to the contents of the present invention without departing from the scope of the present invention as defined by the appended claims.

## Claims

1. A vehicle, comprising an air conditioner air guide pipe(200) and at least one air outlet assembly (100), each of the at least one air outlet assembly(100) comprising:
an instrument panel decorative plate(10), an air channel which is in communication with the air conditioner air guide pipe(200) of the vehicle being arranged at the inside of the instrument panel decorative plate(10), and an opening at the end, away from the air conditioner air guide pipe(200), of the air channel facing a driver compartment; and
an air outlet main body component(20) arranged in the air channel, a first channel which is capable of being opened and closed being arranged in the air outlet main body component(20), a second channel being formed by an outer surface of the air outlet main body component(20) and an inner wall face of the air channel, the air outlet main body component(20) being configured to be controlled to move in the axial direction of the air channel and rotate around a preset axis, and the preset axis being perpendicular to a vertical plane in the axial direction of the air channel; and
at least one damper blade(30) rotatably connected to the inside of the air channel and configured to be in communication with or block the air channel; and **characterized by** a linkage mechanism(40) configured to connect the at least one damper blade (30) and the air outlet main body component(20), so that the air outlet main body component(20) drives the at least one damper blade (30) to rotate during movement.

2. The vehicle according to claim 1, **characterized in that**
the end, close to the driver compartment, of the air channel is configured to gradually expand in a direction pointing to the driver compartment, and an appearance of the end, close to the driver compartment, of the air outlet main body component(20) is configured to gradually shrink in the direction pointing to the driver compartment, so that an expansion opening is formed in the end, close to the driver compartment, of the second channel.

3. The vehicle according to claim 1, **characterized in that**
the at least one damper blade (30) is configured to block the air channel when the air outlet main body component(20) is located on an initial position and to be in gradual communication with the air channel when the air outlet main body component(20) moves from the initial position to the driver compartment.

4. The vehicle according to claim 3, **characterized in that**
the at least one damper blade (30) is further configured to be in communication with the air channel to the greatest extent when the air outlet main body component(20) moves to be partially exposed out of the instrument panel decorative plate(10).

5. The vehicle according to any one of claims 1, 3 and 4, **characterized in that** the air outlet main body component(20) comprises:
an air outlet housing(21) in which the first channel is formed, the second channel being formed by an outer surface of the air outlet housing (21) and the inner wall face of the air channel.

6. The vehicle according to claim 5, **characterized in that**
a plurality of air outlet nozzles(211) configured to partition an air flow inside the first channel into a plurality of paths of air flows are formed on the end, close to the driver compartment, of the air outlet housing (21).

7. The vehicle according to claim 6, **characterized in that**
each of the air outlet nozzles (211) is configured to gradually shrink in the direction pointing to the driver compartment.

8. The vehicle according to claim 5, **characterized in that** the air outlet main body component(20) further comprises:
two first rotating shafts(22) aligned to the preset axis and respectively arranged on two sides of the outer surface of the air outlet housing (21); and
two first gears(23), each of the first gears (23) rotatably sleeving each of the first rotating shafts (22);
the instrument panel decorative plate(10) being provided with strip-shaped gear holes(101) corresponding to each of the first gears (23), length directions of the strip-shaped gear holes (101) being parallel to the axial direction of the air channel, and at least one inner wall in the length directions of the strip-shaped gear holes (101) being provided with a plurality of first gear teeth (102) meshed with the first gears (23).

9. The vehicle according to claim 8, **characterized in that** the air outlet main body component(20) further comprises:
an integrated lower-layer blade(24) comprising a plurality of second rotating shafts(241) and a plurality of blinkers(242) in one-to-one correspondence to each other, the plurality of blinkers (242) being linked, each of the second rotating shafts (241) being configured to rotatably connect the corresponding blinker (242) to the air outlet housing (21), one of the blinkers (242) being fixedly provided with a toggling frame(243), and the toggling frame (243) being provided with a through hole (244) vertically passing through the blinker (242); and
an impeller(25) rotatably connected to the air outlet housing (21), the axial direction of the impeller (25) being parallel to axial directions of the second rotating shafts (241), the impeller (25) being provided with a gap(251) with an opening facing the integrated lower-layer blade (24), at least parts of the toggling frame (243) extending into the gap (251), and therefore, when the impeller (25) rotates, the toggling frame (243) drives the integrated lower-layer blade (24) to overturn to close or be in communication with the first channel and adjust a direction of an air flow flowing through the first channel under the condition that the first channel is in communication.

10. The vehicle according to claim 9, **characterized in that**
the first rotating shafts (22) are arranged in the transverse direction of the vehicle, and the second rotating shafts (241) are arranged in the vertical direction of the vehicle.

11. The vehicle according to claim 8, **characterized in that** the linkage mechanism (40) comprises:
at least one second gear(41);
third rotating shafts(42) corresponding to each of the second gears (41), each of the third rotating shafts (42) shafts being fixed to a rotation center of each of the second gears (41) and being fixedly connected to each of the damper blades (30), wherein axes of the third rotating shafts (42) are parallel to axes of the first rotating shafts (22); and
a gear sheet(43) extending in the axial direction of the air channel, one end of the gear sheet (43) sleeving one of the first rotating shafts (22), and a plurality of second gear teeth (431) meshed with the second gears (41) being arranged in the length direction of the gear sheet (43), so that the air outlet main body component (20) drives each of the damper blades (30) to rotate during movement.

12. The vehicle according to claim 11, **characterized in that**
the gear sheet (43) is sheet-like, and the thickness direction thereof is parallel to the axes of the third rotating shafts (42); and
the number of the second gears (41) is two, and the two second gears (41) are respectively arranged on two sides in the width direction of the gear sheet (43) sheet and are respectively meshed with the second gear teeth (431) opposite thereto.

13. The vehicle according to claim 1, **characterized in that** each of the at least one air outlet assembly (100) further comprises:
a first motor configured to control the air outlet main body component(20) to move; and
a second motor configured to control the air outlet main body component(20) to rotate.

## Patentansprüche

1. Ein Fahrzeug, beinhaltend ein Klimaanlagen-Luftführungsrohr (200) und mindestens eine Luftauslassanordnung (100), wobei jede der mindestens einen Luftauslassanordnung (100) Folgendes beinhaltet:
eine Instrumententafel-Dekorationsplatte (10), wobei ein Luftkanal, der mit dem Klimaanlagen-Luftführungsrohr (200) des Fahrzeugs in Kommunikation steht, an der Innenseite der Instrumententafel-Dekorationsplatte (10) angeordnet ist und eine Öffnung an dem von dem Klimaanlagen-Luftführungsrohr (200) entfernten Ende des Luftkanals einem Fahrerraum zugewandt ist; und
eine Luftauslass-Hauptkörperkomponente (20), die in dem Luftkanal angeordnet ist, wobei ein erster Kanal, der geöffnet und geschlossen werden kann, in der Luftauslass-Hauptkörperkomponente (20) angeordnet ist, wobei ein zweiter Kanal durch eine äußere Oberfläche der Luftauslass-Hauptkörperkomponente (20) und eine innere Wandfläche des Luftkanals gebildet wird, wobei die Luftauslass-Hauptkörperkomponente (20) konfiguriert ist, um gesteuert zu werden, sich in der axialen Richtung des Luftkanals zu bewegen und sich um eine voreingestellte Achse zu drehen, und wobei die voreingestellte Achse senkrecht zu einer vertikalen Ebene in der axialen Richtung des Luftkanals ist; und
mindestens ein Dämpferblatt (30), das drehbar mit der Innenseite des Luftkanals verbunden ist und konfiguriert ist, um mit dem Luftkanal in Kommunikation zu stehen oder diesen zu blockieren; und **gekennzeichnet durch**
einen Kopplungsmechanismus (40), der konfiguriert ist, um das mindestens eine Dämpferblatt (30) und die Luftauslass-Hauptkörperkomponente (20) zu verbinden, sodass die Luftauslass-Hauptkörperkomponente (20) das mindestens eine Dämpferblatt (30) dazu antreibt, sich während der Bewegung zu drehen.

2. Fahrzeug gemäß Anspruch 1, **dadurch gekennzeichnet, dass** das nahe dem Fahrerraum liegende Ende des Luftkanals konfiguriert ist, um sich in einer Richtung, die zu dem Fahrerraum zeigt, graduell zu erweitern, und ein Erscheinungsbild des nahe dem Fahrerraum liegenden Endes der Luftauslass-Hauptkörperkomponente (20) konfiguriert ist, um in der Richtung, die zu dem Fahrerraum zeigt, graduell kleiner zu werden, sodass eine Erweiterungsöffnung in dem nahe dem Fahrerraum liegenden Ende des zweiten Kanals gebildet wird.

3. Fahrzeug gemäß Anspruch 1, **dadurch gekennzeichnet, dass** das mindestens eine Dämpferblatt (30) konfiguriert ist, um den Luftkanal zu blockieren, wenn sich die Luftauslass-Hauptkörperkomponente (20) an einer Anfangsposition befindet, und um mit dem Luftkanal in gradueller Kommunikation zu stehen, wenn sich die Luftauslass-Hauptkörperkomponente (20) von der Anfangsposition zu dem Fahrerraum bewegt.

4. Fahrzeug gemäß Anspruch 3, **dadurch gekennzeichnet, dass**
das mindestens eine Dämpferblatt (30) ferner konfiguriert ist, um in dem größten Ausmaß mit dem Luftkanal in Kommunikation zu stehen, wenn sich die Luftauslass-Hauptkörperkomponente (20) bewegt, um teilweise aus der Instrumententafel-Dekorationsplatte (10) freiliegend zu sein.

5. Fahrzeug gemäß einem der Ansprüche 1, 3 und 4, **dadurch gekennzeichnet, dass** die Luftauslass-Hauptkörperkomponente (20) Folgendes beinhaltet:
ein Luftauslassgehäuse (21), in dem der erste Kanal gebildet ist, wobei der zweite Kanal durch eine äußere Oberfläche des Luftauslassgehäuses (21) und die innere Wandfläche des Luftkanals gebildet wird.

6. Fahrzeug gemäß Anspruch 5, **dadurch gekennzeichnet, dass**
eine Vielzahl von Luftauslassdüsen (211), die konfiguriert sind, um einen Luftstrom innerhalb des ersten Kanals in eine Vielzahl von Wegen von Luftströmen zu unterteilen, an dem nahe dem Fahrerraum liegenden Ende des Luftauslassgehäuses (21) gebildet ist.

7. Fahrzeug gemäß Anspruch 6, **dadurch gekennzeichnet, dass** jede der Luftauslassdüsen (211) konfiguriert ist, um in der Richtung, die zu dem Fahrerraum zeigt, graduell kleiner zu werden.

8. Fahrzeug gemäß Anspruch 5, **dadurch gekennzeichnet, dass** die Luftauslass-Hauptkörperkomponente (20) ferner Folgendes beinhaltet:
zwei erste Drehwellen (22), die auf die voreingestellte Achse ausgerichtet sind und jeweilig auf zwei Seiten der äußeren Oberfläche des Luftauslassgehäuses (21) angeordnet sind; und
zwei erste Zahnräder (23), wobei jedes der ersten Zahnräder (23) jede der ersten Drehwellen (22) drehbar umhüllt;
wobei die Instrumententafel-Dekorationsplatte (10) mit streifenförmigen Zahnradlöchern (101) versehen ist, die jedem der ersten Zahnräder (23) entsprechen, wobei Längsrichtungen der streifenförmigen Zahnradlöcher (101) parallel zu der axialen Richtung des Luftkanals sind und mindestens eine innere Wand in den Längsrichtungen der streifenförmigen Zahnradlöcher (101) mit einer Vielzahl von ersten Zahnradzähnen (102) versehen ist, die mit den ersten Zahnrädern (23) in Eingriff stehen.

9. Fahrzeug gemäß Anspruch 8, **dadurch gekennzeichnet, dass** die Luftauslass-Hauptkörperkomponente (20) ferner Folgendes beinhaltet:
ein integriertes Unterschichtblatt (24), das eine Vielzahl von zweiten Drehwellen (241) und eine Vielzahl von Klappen (242) in einer Eins-zu-Eins-Entsprechung zueinander beinhaltet, wobei die Vielzahl von Klappen (242) gekoppelt ist, wobei jede der zweiten Drehwellen (241) konfiguriert ist, um die entsprechende Klappe (242) drehbar mit dem Luftauslassgehäuse (21) zu verbinden, wobei eine der Klappen (242) fest mit einem Kipprahmen (243) versehen ist und der Kipprahmen (243) mit einem Durchgangsloch (244) versehen ist, das vertikal durch die Klappe (242) verläuft; und
ein Antriebsrad (25), das drehbar mit dem Luftauslassgehäuse (21) verbunden ist, wobei die axiale Richtung des Antriebsrads (25) parallel zu axialen Richtungen der zweiten Drehwellen (241) ist, wobei das Antriebsrad (25) mit einem Spalt (251) mit einer Öffnung versehen ist, die dem integrierten Unterschichtblatt (24) zugewandt ist,
wobei sich mindestens Teile des Kipprahmens (243) in den Spalt (251) erstrecken und daher, wenn sich das Antriebsrad (25) dreht, der Kipprahmen (243) das integrierte Unterschichtblatt (24) dazu antreibt, sich umzudrehen, um sich zu schließen oder mit dem ersten Kanal in Kommunikation zu stehen und eine Richtung eines Luftstroms, der durch den ersten Kanal strömt, unter der Bedingung einzustellen, dass der erste Kanal in Kommunikation steht.

10. Fahrzeug gemäß Anspruch 9, **dadurch gekennzeichnet, dass** die ersten Drehwellen (22) in der Querrichtung des Fahrzeugs angeordnet sind und die zweiten Drehwellen (241) in der vertikalen Richtung des Fahrzeugs angeordnet sind.

11. Fahrzeug gemäß Anspruch 8, **dadurch gekennzeichnet, dass** der Kopplungsmechanismus (40) Folgendes beinhaltet:
mindestens ein zweites Zahnrad (41);
dritte Drehwellen (42), die jedem der zweiten Zahnräder (41) entsprechen, wobei jede der dritten Drehwellen (42) an einem Drehzentrum jedes der zweiten Zahnräder (41) befestigt ist und fest mit jedem der Dämpferblätter (30) verbunden ist, wobei Achsen der dritten Drehwellen (42) parallel zu Achsen der ersten Drehwellen (22) sind; und
eine Zahnradplatte (43), die sich in der axialen Richtung des Luftkanals erstreckt, wobei ein Ende der Zahnradplatte (43) eine der ersten Drehwellen (22) umhüllt und eine Vielzahl von zweiten Zahnradzähnen (431), die mit den zweiten Zahnrädern (41) in Eingriff stehen, in der Längsrichtung der Zahnradplatte (43) angeordnet sind, sodass die Luftauslass-Hauptkörperkomponente (20) jedes der Dämpferblätter (30) dazu antreibt, sich während der Bewegung zu drehen.

12. Fahrzeug gemäß Anspruch 11, **dadurch gekennzeichnet, dass**
die Zahnradplatte (43) plattenartig ist und die Dickenrichtung davon parallel zu den Achsen der dritten Drehwellen (42) ist; und
die Anzahl der zweiten Zahnräder (41) zwei ist und die zwei zweiten Zahnräder (41) jeweilig auf zwei Seiten in der Breitenrichtung der Zahnradplatte (43) angeordnet sind und jeweilig mit den ihnen gegenüberliegenden zweiten Zahnradzähnen (431) in Eingriff stehen.

13. Fahrzeug gemäß Anspruch 1, **dadurch gekennzeichnet, dass** jede der mindestens einen Luftauslassanordnung (100) ferner Folgendes beinhaltet:
einen ersten Motor, der konfiguriert ist, um die Luftauslass-Hauptkörperkomponente (20) zu steuern, sich zu bewegen; und
einen zweiten Motor, der konfiguriert ist, um die Luftauslass-Hauptkörperkomponente (20) zu steuern, sich zu drehen.

## Revendications

1. Un véhicule, comprenant un tuyau de guidage d'air de climatiseur (200) et au moins un ensemble bouche d'air (100), chaque ensemble parmi l'au moins un ensemble bouche d'air (100) comprenant :
une plaque décorative de tableau de bord (10), un conduit d'air qui est en communication avec le tuyau de guidage d'air de climatiseur (200) du véhicule étant agencé à l'intérieur de la plaque décorative de tableau de bord (10), et une ouverture à l'extrémité, éloignée du tuyau de guidage d'air de climatiseur (200), du conduit d'air faisant face à un habitacle ; et
un composant formant corps principal de bouche d'air (20) agencé dans le conduit d'air, un premier conduit qui est à même d'être ouvert et fermé étant agencé dans le composant formant corps principal de bouche d'air (20), un deuxième conduit étant formé par une surface externe du composant formant corps principal de bouche d'air (20) et une face de paroi interne du conduit d'air, le composant formant corps principal de bouche d'air (20) étant configuré pour être commandé en déplacement dans la direction axiale du conduit d'air et en rotation autour d'un axe prédéfini, et l'axe prédéfini étant perpendiculaire à un plan vertical dans la direction axiale du conduit d'air ; et
au moins une lame de registre (30) raccordée de manière rotative à l'intérieur du conduit d'air et configurée pour établir une communication avec le conduit d'air ou l'obturer ; et **caractérisé par**
un mécanisme articulé (40) configuré pour raccorder l'au moins une lame de registre (30) et le composant formant corps principal de bouche d'air (20), de sorte que le composant formant corps principal de bouche d'air (20) entraîne l'au moins une lame de registre (30) en rotation durant son déplacement.

2. Le véhicule selon la revendication 1, **caractérisé en ce que**
l'extrémité, proche de l'habitacle, du conduit d'air est configurée pour s'élargir progressivement dans un sens allant vers l'habitacle, et un aspect de l'extrémité, proche de l'habitacle, du composant formant corps principal de bouche d'air (20) est configuré pour se resserrer progressivement dans le sens allant vers l'habitacle, de sorte qu'une ouverture à élargissement est formée dans l'extrémité, proche de l'habitacle, du deuxième conduit.

3. Le véhicule selon la revendication 1, **caractérisé en ce que**
l'au moins une lame de registre (30) est configurée pour obturer le conduit d'air lorsque le composant formant corps principal de bouche d'air (20) est situé à une position initiale et pour établir une communication progressive avec le conduit d'air lorsque le composant formant corps principal de bouche d'air (20) se déplace depuis la position initiale vers l'habitacle.

4. Le véhicule selon la revendication 3, **caractérisé en ce que**
l'au moins une lame de registre (30) est en outre configurée pour établir une communication avec le conduit d'air au maximum lorsque le composant formant corps principal de bouche d'air (20) se déplace jusqu'à être partiellement exposé hors de la plaque décorative de tableau de bord (10).

5. Le véhicule selon l'une quelconque des revendications 1, 3 et 4, **caractérisé en ce que** le composant formant corps principal de bouche d'air (20) comprend :
une coque de bouche d'air (21) dans laquelle est formé le premier conduit, le deuxième conduit étant formé par une surface externe de la coque de bouche d'air (21) et la face de paroi interne du conduit d'air.

6. Le véhicule selon la revendication 5, **caractérisé en ce que**
une pluralité de buses de bouche d'air (211) configurées pour diviser un écoulement d'air à l'intérieur du premier conduit en une pluralité de trajets d'écoulement d'air sont formées sur l'extrémité, proche de l'habitacle, de la coque de bouche d'air (21).

7. Le véhicule selon la revendication 6, **caractérisé en ce que**
chacune des buses de bouche d'air (211) est configurée pour se resserrer progressivement dans le sens allant vers l'habitacle.

8. Le véhicule selon la revendication 5, **caractérisé en ce que** le composant formant corps principal de bouche d'air (20) comprend en outre :
deux premiers arbres rotatifs (22) alignés avec l'axe prédéfini et agencés respectivement sur deux côtés de la surface externe de la coque de bouche d'air (21) ; et
deux premières roues d'engrenage (23), chacune des premières roues d'engrenage (23) étant emmanchée de manière rotative sur chacun des premiers arbres rotatifs (22) ;
la plaque décorative de tableau de bord (10) étant pourvue de trous pour roue d'engrenage en forme de bande (101) correspondant à chacune des premières roues d'engrenage (23), des sens de la longueur des trous pour roue d'engrenage en forme de bande (101) étant parallèles à la direction axiale du conduit d'air, et au moins une paroi interne dans les sens de la longueur des trous pour roue d'engrenage en forme de bande (101) étant pourvue d'une pluralité de premières dents pour roue d'engrenage (102) engrenées avec les premières roues d'engrenage (23).

9. Le véhicule selon la revendication 8, **caractérisé en ce que** le composant formant corps principal de bouche d'air (20) comprend en outre :
une lame de couche inférieure intégrée (24) comprenant une pluralité de deuxièmes arbres rotatifs (241) et une pluralité de volets (242) en correspondance biunivoque les uns avec les autres, la pluralité de volets (242) étant reliés, chacun des deuxièmes arbres rotatifs (241) étant configuré pour raccorder de manière rotative le volet (242) correspondant à la coque de bouche d'air (21), l'un des volets (242) étant pourvu de manière fixe d'une structure de basculement (243), et la structure de basculement (243) étant pourvue d'un trou traversant (244) passant verticalement à travers le volet (242) ; et
une roue (25) raccordée de manière rotative à la coque de bouche d'air (21), la direction axiale de la roue (25) étant parallèle à des directions axiales des deuxièmes arbres rotatifs (241), la roue (25) étant pourvue d'un interstice (251) ayant une ouverture faisant face à la lame de couche inférieure intégrée (24), au moins des parties de la structure de basculement (243) s'étendant dans l'interstice (251), et en conséquence, lorsque la roue (25) tourne, la structure de basculement (243) entraîne la lame de couche inférieure intégrée (24) en pivotement pour fermer ou établir une communication avec le premier conduit et régler une direction d'un écoulement d'air s'écoulant dans le premier conduit à condition que le premier conduit soit en communication.

10. Le véhicule selon la revendication 9, **caractérisé en ce que**
les premiers arbres rotatifs (22) sont agencés dans la direction transversale du véhicule, et les deuxième arbres rotatifs (241) sont agencés dans la direction verticale du véhicule.

11. Le véhicule selon la revendication 8, **caractérisé en ce que** le mécanisme articulé (40) comprend :
au moins une deuxième roue d'engrenage (41) ;
des troisièmes arbres rotatifs (42) correspondant à chacune des deuxièmes roues d'engrenage (41), chacun des troisièmes arbres rotatifs (42) étant fixé à un centre de rotation de chacune des deuxièmes roues d'engrenage (41) et étant raccordé de manière fixe à chacune des lames de registre (30), des axes des troisièmes arbres rotatifs (42) étant parallèles à des axes des premiers arbres rotatifs (22) ; et
une plaque d'engrenage (43) s'étendant dans la direction axiale du conduit d'air, une extrémité de la plaque d'engrenage (43) étant emmanchée sur l'un des premiers arbres rotatifs (22), et une pluralité de deuxièmes dents d'engrenage (431) engrenées avec les deuxièmes roues d'engrenage (41) étant agencées dans le sens de la longueur de la plaque d'engrenage (43), de sorte que le composant formant corps principal de bouche d'air (20) entraîne chacune des lames de registre (30) en rotation durant son déplacement.

12. Le véhicule selon la revendication 11, **caractérisé en ce que**
la plaque d'engrenage (43) est en forme de plaque, et son sens de l'épaisseur est parallèle aux axes des troisièmes arbres rotatifs (42) ; et
le nombre des deuxièmes roues d'engrenage (41) est de deux, et les deux deuxièmes roues d'engrenage (41) sont agencées respectivement sur deux côtés dans le sens de la largeur de la plaque d'engrenage (43) et sont engrenées respectivement avec les deuxièmes dents d'engrenage (431) qui leur font face.

13. Le véhicule selon la revendication 1, **caractérisé en ce que** chaque ensemble parmi l'au moins un ensemble bouche d'air (100) comprend en outre :
un premier moteur configuré pour commander le déplacement du composant corps principal de bouche d'air (20) ; et
un deuxième moteur configuré pour commander la rotation du composant corps principal de bouche d'air (20).
